# FASCICULE DE BREVET EUROPEEN

(11) **EP 4 175 842 B1**
(45) Date de publication et mention de la délivrance du brevet: **04.09.2024**
(21) Numéro de dépôt: 21748923.6
(22) Date de dépôt: 05.07.2021
(51) Int. Cl.: B60J 7/06

(54) **SYSTÈME DE COUVERTURE AMOVIBLE COMPRENANT UN DISPOSITIF DE COMPENSATION**
ABNEHMBARES DACHSYSTEM MIT AUSGLEICHSVORRICHTUNG
REMOVABLE ROOFING SYSTEM COMPRISING A COMPENSATION DEVICE

(30) Priorité: 06.07.2020 FR 2007236
(43) Date de publication de la demande: 10.05.2023
(73) Titulaire: Innovaction Technologies, 42110 Epercieux St Paul (FR)
(72) Inventeur: SAJNOVIC, Srecko, 42110 EPERCIEUX ST PAUL (FR); DENIS, Sylvain, 42300 VILLEREST (FR)
(74) Mandataire: Casalonga
(86) Numéro de dépôt international: PCT/FR2021/051223
(87) Numéro de publication internationale: WO 2022/008823

(56) Documents cités:
- WO-A1-2007/124787
- WO-A1-96/33882
- DE-U1- 202019 106 423
- FR-A1- 2 480 203

## Description

### Domaine technique

L'invention a pour domaine technique les dispositifs de compensation de tension dans des cordes et les systèmes de couverture amovible comprenant de tels dispositifs de compensation.

### Etat de la technique antérieure

Un système de couverture amovible permet de couvrir ou de découvrir une ouverture en entrainant des arceaux liés à une couverture amovible. Les arceaux sont généralement supportés par un rail et fixés à un câble d'entrainement qui permet de les déplacer dans un sens ou dans l'autre, entrainant la couverture amovible lors de leur déplacement.

De tels systèmes sont notamment employés pour la couverture de bennes de camions.

De l'état de la technique, on connait le document WO2009-027285 décrivant un système de couverture amovible pour bennes de camion. Ce système comprend des câbles métalliques reliés à un arceau de conduite et mis en mouvement par au moins un moteur. Toutefois, il a été constaté qu'un tel système est soumis à des pertes de tension des câbles métalliques à la suite d'un impact sur un arceau lors du chargement. Ces mêmes pertes de tension interviennent également au cours du temps lors de l'utilisation normale du système par vieillissement des câbles métalliques. La perte de tension des câbles métalliques ne peut être résolue que par leur changement. Cette opération de maintenance nécessite une longue immobilisation de la benne.

On connait également le document WO2014-012895A1 du demandeur, qui décrit un système d'enroulement/déroulement permettant de répondre aux problématiques de tension des câbles et de décalage de l'arceau de conduite de la couverture. Le document DE 20 2019 106423 U1 divulgue un système de couverture amovible avec une seule corde transitant dans deux rail d'écoute, les rails étant muni d'au moins une poulie d'extrémité et d'au moins deux poulies d'angle, un dispositif de compensation.

Ce système présente une amélioration par rapport aux systèmes antérieurs du fait de la compensation automatique de tension des cordes de traction, notamment lors des impacts sur les arceaux.

Néanmoins, malgré cette compensation automatique, ce système présente tout de même des défaillances lorsque l'arceau de conduite est confronté à des contraintes trop importantes. Cela peut intervenir lors du contact de l'arceau de conduite avec un obstacle imprévu empêchant alors la poursuite du déplacement de l'arceau. Les défaillances découlent d'une sollicitation trop importante du ressort de rappel de la roue de bout de rail d'écoute, réduisant à terme sa raideur et par suite, la tension du système.

Un tel système de couverture amovible présente également un encombrement trop important au niveau du tambour d'enroulement et du moteur, notamment lors de la rotation du véhicule tracteur par rapport à la semi-remorque. En effet, les dispositifs de compensation externes et les poulies sont situées sur les côtés de la remorque ce qui en augmente l'encombrement. Le système de couverture interfère alors avec le véhicule tracteur lorsque le camion tourne.

Il apparait ainsi que les systèmes de couverture amovible selon l'état de la technique antérieure nécessite un entretien très important, menant à un cout opérationnel très élevé. Pour ces raisons ainsi que la pénibilité de son emploi au quotidien, le système de couverture pour bennes de camion est très peu employé, malgré un bénéfice en termes de consommation de carburant et de protection des matières transportées.

Il existe ainsi un besoin pour un système de couverture amovible plus résistant aux contraintes mécaniques.

Il existe également un besoin pour un système de couverture amovible plus compact.

### Exposé de l'invention

L'invention a pour objet un système de couverture amovible comprenant un moteur inséré dans un tambour, une corde, un dispositif de compensation, deux rails d'écoute, au moins un arceau de conduite et une couverture amovible, le au moins un arceau de conduite étant relié à la corde et à la couverture amovible, et étant conçu pour que chacune de ses extrémités coulisse dans un rail d'écoute, la corde transitant dans chaque rail d'écoute et dans le dispositif de compensation et étant reliée à ses deux extrémités au tambour, de sorte que la mise en rotation du tambour par le moteur fait se déplacer la corde dans un sens fonction du sens de rotation du tambour, déployant ou rétractant la couverture amovible par déplacement du au moins un arceau de conduite.

Chaque rail d'écoute est muni d'au moins une poulie d'extrémité et d'au moins deux poulies d'angle conçues pour guider la corde du dispositif de compensation vers la au moins une poulie d'extrémité, et le dispositif de compensation est conçu pour compenser automatiquement les variations de tension de la corde.

Le système de couverture amovible peut comprendre au moins un arceau suiveur, lié seulement à la couverture amovible et étant conçu pour que chacune de ses extrémités coulisse dans un rail d'écoute.

Les arceaux peuvent être aptes à amortir un choc qui leur est appliqué.

Le tambour peut être muni dans sa partie centrale d'une couronne formant une première vis sans fin, le système de couverture amovible comprenant par ailleurs un dispositif de guidage muni de deux poulies reliées entre elles par un cylindre fileté formant une deuxième vis sans fin, conçu pour s'engrener dans la première vis sans fin, de sorte que le dispositif de guidage soit entrainé en rotation et en translation lorsque le tambour est en rotation, les poulies se déplaçant alors à une vitesse telle qu'elles sont toujours alignées avec le point d'enroulement de la corde sur le tambour.

Le dispositif de compensation peut comprendre un support central allongé, deux cavaliers montés coulissants sur le support central, au moins deux ressorts de rappel et des poulies, le premier cavalier portant une septième poulie et étant connecté à une première extrémité du dispositif de compensation par au moins un ressort de sorte à compenser la tension exercée par la corde sur la septième poulie, le deuxième cavalier portant une huitième poulie et étant connecté à une deuxième extrémité du dispositif de compensation par au moins un ressort de sorte à compenser la tension exercée par la corde sur la huitième poulie, un premier ensemble de poulies permettant de renvoyer la corde du tambour vers le premier rail d'écoute, un deuxième ensemble de poulies permettant de renvoyer la corde du premier rail d'écoute vers le deuxième rail d'écoute, un troisième ensemble de poulies permettant de renvoyer la corde du deuxième rail d'écoute vers le tambour.

Chaque cavalier peut comprendre une première partie, une deuxième partie et une troisième partie contiguës, la première et la troisième parties étant face à face, les cavaliers étant disposés sur le support central de sorte que leurs premières et troisièmes parties soient disposées de part et d'autre.

La première partie d'un premier cavalier peut supporter la septième poulie sur sa face interne, la troisième partie d'un deuxième cavalier supportant alors la huitième poulie également sur sa face interne.

Les ressorts peuvent être disposés sur la deuxième face du dispositif de compensation et sont reliés aux deuxièmes parties des cavaliers.

Le deuxième ensemble de poulies peut comprendre une quatrième poulie disposée dans une fente ménagée dans l'habillage du dispositif de compensation de sorte à pouvoir en modifier la position, le réglage de la position de la quatrième poulie permettant de régler la différence de position entre les deux extrémités du au moins un arceau de conduite, afin d'en ajuster l'alignement.

Le troisième ensemble de poulies peut comprendre une cinquième poulie disposée dans une fente ménagée dans l'habillage du dispositif de compensation de sorte à pouvoir en modifier la position, le réglage de la position de la cinquième poulie permettant de régler la tension de la corde.

Un autre objet de l'invention concerne l'application du système de couverture défini ci-dessus à la couverture d'un camion, d'une remorque de camion ou d'un bâtiment.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- [Fig 1] illustre un système de couverture selon l'invention,
- [Fig 2] illustre le passage de la corde dans le dispositif de compensation et un deuxième rail d'écoute,
- [Fig 3] illustre une première face du dispositif de compensation,
- [Fig 4] illustre une troisième face du dispositif de compensation, et
- [Fig 5] illustre une quatrième face du dispositif de compensation.

### Description détaillée

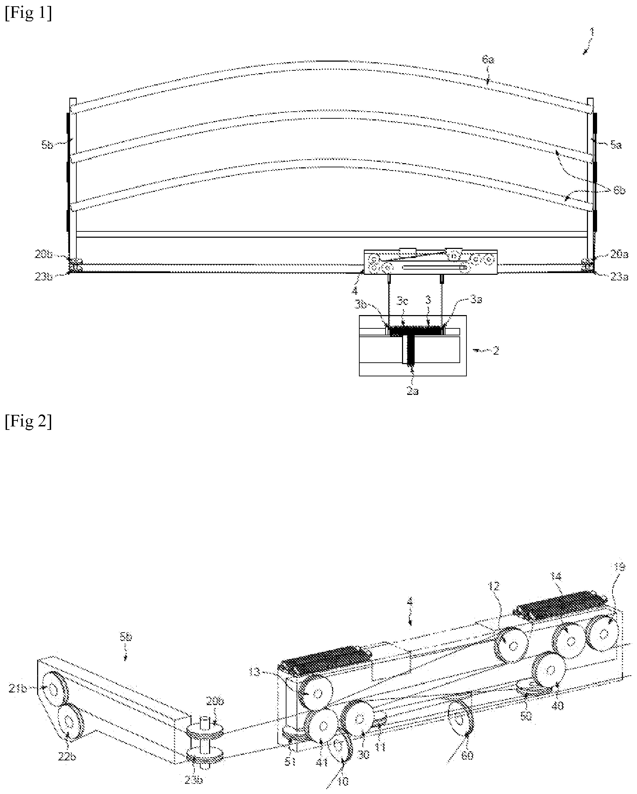

La figure 1 illustre un système de couverture amovible 1 selon l'invention comprenant un moteur, notamment un moteur tubulaire, inséré dans un tambour 2, une corde, un dispositif de compensation 4, deux rails d'écoute 5a,5b, au moins un arceau de conduite 6a et une couverture amovible non illustrée pour des raisons de lisibilité. Selon les modes de réalisation, le système de couverture amovible comprend également au moins un arceau suiveur 6b.

Comme cela va être explicité plus loin, un arceau de conduite 6a est relié à la corde et à la couverture amovible alors qu'un arceau suiveur 6b n'est relié qu'à la couverture amovible et sont conçus de sorte que leurs extrémités coulissent dans les rails d'écoute 5a,5b. Ainsi, la mise en mouvement de la corde par le moteur permet la mise en mouvement de l'arceau de conduite 6a. Par suite, le mouvement de l'arceau de conduite 6a est transmis aux arceaux suiveurs 6b soit par l'intermédiaire de la traction appliquée à la couverture amovible, soit par la pression résultant de l'appui de l'arceau de conduite 6a sur les arceaux suiveurs 6b.

Chaque arceau de conduite 6a et chaque arceau suiveur 6b est muni d'un curseur à chaque extrémité, conçus de sorte à pouvoir se déplacer chacun sur un rail d'écoute différent sans pouvoir en sortir. Les curseurs de l'arceau de conduite 6a sont en plus reliés à la corde de sorte que le mouvement imposé à la corde soit transmis à l'arceau de conduite 6a. Par rapport à l'état de la technique, une seule corde et un seul moteur sont nécessaires pour déplacer les deux extrémités de l'arceau de commande. On évite ainsi un décalage dans la position des extrémités de l'arceau de commande lorsqu'un obstacle se trouve sur la trajectoire de l'arceau à proximité d'un rail d'écoute, qui apparait lorsque deux cordes ou filins différents sont employés pour chaque extrémité de l'arceau de commande.

De plus, les arceaux 6a, 6b sont aptes à amortir un choc qui leur est appliqué de sorte à limiter la tension appliquée à la corde dans une telle situation. Ils contribuent donc à l'aspect auto-tenseur du système de couverture amovible avec le dispositif de compensation 4.

Les rails d'écoute 5a,5b sont disposés de part et d'autre de la surface à couvrir et reçoivent tous deux la même corde d'entrainement. Ils sont munis d'au moins une poulie d'extrémité et de deux poulies d'angle.

Les deux extrémités de la corde d'entrainement sont reliées à un tambour 2 mis en rotation par un moteur. Depuis une première extrémité reliée au tambour 2, la corde traverse successivement le dispositif de compensation 4, un premier rail d'écoute 5a, de nouveau le dispositif de compensation 4, le deuxième rail d'écoute 5b, puis à nouveau le dispositif de compensation 4, pour enfin revenir au tambour 2. Une telle disposition permet de ne nécessiter qu'une seule corde au lieu des deux cordes généralement requises dans l'état de l'art et d'assurer la compensation de la tension en trois parties distinctes de la corde avec un seul dispositif de compensation 4.

Les figures 1 et 2 montrent que la corde rentre par une première poulie 10 dans le dispositif de compensation 4, en ressort par une deuxième neuvième poulie 19 à destination d'une première poulie d'angle 20a du premier rail d'écoute 5a. La corde s'étend ensuite dans le rail d'écoute jusqu'à une première poulie d'extrémité avant de revenir vers une deuxième poulie d'angle 23a du premier rail d'écoute. Dans un mode de réalisation avantageux, une deuxième poulie d'extrémité est disposée en bout de rail de sorte à appliquer une contrainte sur la corde en sortie de la première poulie d'extrémité. La figure 2 illustre le placement de ces poulies pour le deuxième rail d'écoute 5b. On peut voir la première poulie d'angle 20b, la première poulie d'extrémité 21b, la deuxième poulie d'extrémité 22b et la deuxième poulie d'angle 23b.

En sortie de la deuxième poulie d'angle 23a du premier rail d'écoute 5a, la corde rentre de nouveau dans le dispositif de compensation 4 par l'intermédiaire d'une troisième poulie 30 jusqu'à une quatrième poulie 40 depuis laquelle la corde ressort du dispositif de compensation 4.

La corde circule alors dans le deuxième rail d'écoute 5b de façon similaire à la façon avec laquelle elle circule dans le premier rail d'écoute 5a. Plus précisément, depuis la quatrième poulie 40, la corde circule jusqu'à une première poulie d'angle 20b du deuxième rail d'écoute 5b. La corde s'étend ensuite dans le rail d'écoute jusqu'à une première poulie d'extrémité avant 21b de revenir vers une deuxième poulie d'angle 23b du deuxième rail d'écoute. Dans un mode de réalisation avantageux, une deuxième poulie d'extrémité 22b est disposée en bout de rail de sorte à appliquer une contrainte sur la corde en sortie de la première poulie d'extrémité 21b.

En sortie de la deuxième poulie d'extrémité 23b du deuxième rail d'écoute 5b, la corde rentre de nouveau dans le dispositif de compensation 4 par l'intermédiaire d'une cinquième poulie 50. La corde ressort du dispositif de compensation 4 par l'intermédiaire d'une sixième poulie 60 en direction du tambour 2.

Dans un mode de réalisation particulier, le tambour 2 est muni dans sa partie centrale d'une couronne 2a formant une première vis sans fin. Un dispositif de guidage 3 comprend deux poulies 3a,3b reliées entre elles par un cylindre 3c muni d'un filetage formant une deuxième vis sans fin, conçue pour s'engrener dans la première vis sans fin. L'ensemble des deux poulies 3a,3b et du cylindre 3c est monté libre en translation sur un axe ou un cylindre s'étendant le long du tambour, de sorte que le dispositif de guidage 3 soit entrainé en rotation et en translation lorsque le tambour 2 est en rotation. Du fait des tailles et pas des vis sans fin, les poulies 3a,3b se déplacent à une vitesse telle qu'elles sont toujours alignées avec le point d'enroulement de la corde sur le tambour 2. Le dispositif de guidage 3 guide ainsi la corde entre le tambour 2 et la première poulie 10 et entre le tambour 2 et la sixième poulie 60. Le dispositif de guidage 3 a pour effet de guider la corde de sorte qu'elle soit comprise dans un plan normal au tambour 2 lors de l'enroulement. La corde est ainsi densément enroulée sur le tambour 2 sans risque d'erreurs d'enroulement pouvant bloquer le système, notamment lors des changements de tension dans le système lors d'un impact sur la couverture amovible.

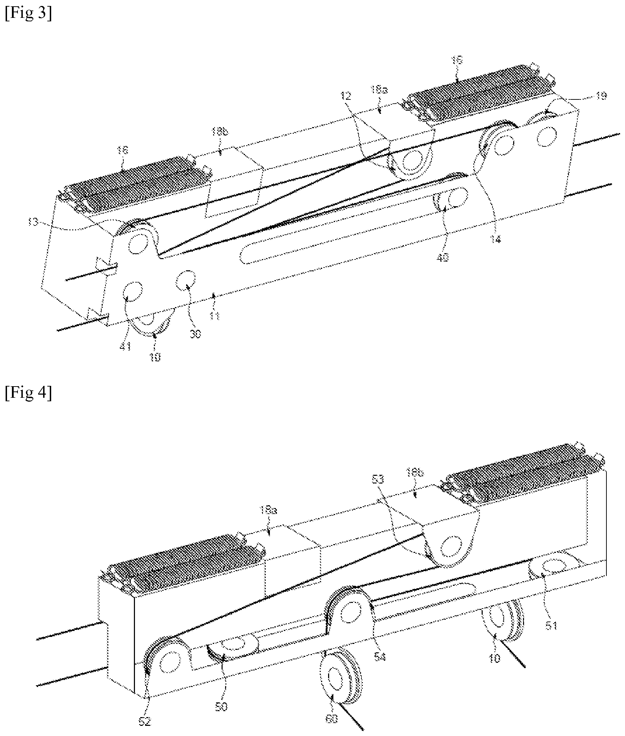

Le dispositif de compensation 4 comprend quatre faces latérales et deux extrémités. Les figures 3 et 4 illustrent respectivement une première face et une troisième face du dispositif de compensation. Le dispositif de compensation 4 comprend un support central 17 allongé, deux cavaliers 18a, 18b montés coulissant sur le support central 17, au moins deux ressorts de rappel 16, des poulies et un habillage extérieur.

Chaque cavalier 18a,18b est formé à partir d'une pièce pliée en forme de U, comprenant une première partie, une deuxième partie et une troisième partie contiguës, la première et la troisième parties étant face à face.

Les cavaliers 18a,18b sont disposés de sorte que leurs premières, deuxièmes et troisièmes parties correspondent respectivement aux première, deuxième et troisième faces du dispositif de compensation 4.

La première partie d'un premier cavalier 18a supporte une septième poulie 12 sur sa face interne. Le premier cavalier 18a est connecté à une première extrémité du dispositif de compensation 4 par au moins un ressort 16 de sorte à compenser la tension exercée par la corde sur la septième poulie 12. Une corde présente l'avantage par rapport à une filin métallique de pouvoir se déformer, et ainsi, de pouvoir compenser un premier niveau de contraintes dans le système de couverture amovible. De plus, une corde n'est pas soumise aux effets de contraction et de dilatation thermique auxquels un filin métallique est soumis. Le système de couverture amovible selon l'invention est ainsi moins susceptible aux défaillances en hiver ou en été du fait d'un changement de longueur des filins métalliques.

La troisième partie d'un deuxième cavalier 18b supporte une huitième poulie 53 également sur sa face interne. Le deuxième cavalier 18b est, quant à lui, connecté à une deuxième extrémité du dispositif de compensation 4 par au moins un ressort 16 de sorte à compenser la tension exercée par la corde sur la huitième poulie 53.

Dans un mode de réalisation particulier, les ressorts 16 sont disposés sur la deuxième face du dispositif de compensation 4 et sont reliés aux deuxièmes parties des cavaliers 18a, 18b. Un tel positionnement permet de minimiser la profondeur du dispositif de compensation 4.

Les cavaliers 18a,18b coulissants, les ressorts 16 et les poulies 12,53 permettent de compenser automatiquement les efforts s'exerçant sur la couverture amovible par l'intermédiaire de la corde, aussi bien du fait de son actionnement que des actions extérieures, comme les impacts ou les contraintes sur les rails d'écoute. Ils permettent également de répartir la compensation des efforts sur plusieurs ressorts 16 afin d'en améliorer l'endurance.

L'habillage extérieur s'étend selon les première, troisième et quatrième faces du dispositif de compensation 4 en ménageant un espace permettant le coulissement des cavaliers 18a, 18b, le passage des poulies fixées sur les cavaliers et la circulation de la corde.

L'habillage selon la première face reçoit une neuvième poulie 19 fixée à proximité de la première extrémité et de la deuxième face, une dixième poulie 14 à proximité de la neuvième poulie 19 et de la deuxième face et une onzième poulie 13 est fixée à proximité de la deuxième extrémité et de la deuxième face.

L'habillage selon la première face reçoit également une douzième poulie 41 fixée à proximité de la deuxième extrémité et de la quatrième face, une troisième poulie 30 à proximité de la neuvième poulie 19 et de la quatrième face et une quatorzième poulie 11 fixée à proximité de la troisième poulie 30 et de la quatrième face.

Une encoche longitudinale est ménagée de façon centrale dans l'habillage à proximité de la quatrième face, de sorte qu'une de ses extrémités soit à proximité de la quatorzième poulie 11. Cette encoche reçoit une quatrième poulie 40 par l'intermédiaire d'une fixation permettant le réglage de la position de la quatrième poulie 40 par déplacement dans l'encoche. Le réglage de la position de la quatrième poulie 40 permet de régler la différence de position entre les deux extrémités de l'arceau de conduite 6a, afin d'en ajuster l'alignement .

L'habillage selon la troisième face reçoit une seizième poulie 52 à proximité de la première extrémité et de la quatrième face et une dix-septième poulie 54 en partie centrale à proximité de la quatrième face.

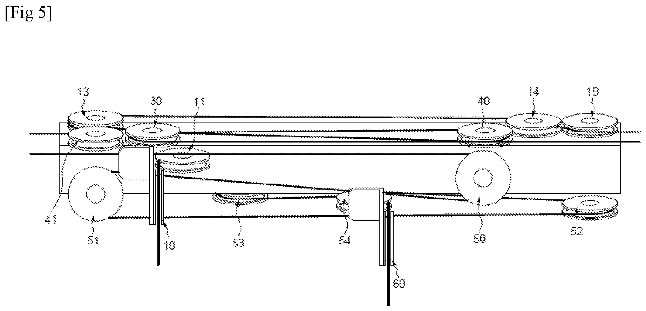

L'habillage selon la quatrième face reçoit une cinquième poulie 50 fixée dans une encoche de réglage à proximité de la première extrémité et une dix-neuvième poulie 51 fixée à proximité de la deuxième extrémité et de la troisième face. L'encoche de réglage de la cinquième poulie 50 est ménagée de façon centrale dans l'habillage et est similaire à l'encoche de réglage de la quatrième poulie 40. Le réglage de la position de la cinquième poulie 50 permet de régler la tension de la corde au niveau du système de couverture amovible. La figure 5 illustre la quatrième face du dispositif de compensation.

Des moyens de fixation, illustrés sur les figures 1 et 2, sont prévus pour fixer le dispositif de compensation 4 à une surface, de sorte que la troisième face du dispositif de compensation 4 soit en vis-à-vis avec la surface de fixation.

Le dispositif de compensation 4 ainsi conçu et muni des moyens de fixation peut être disposé sur la partie de la benne ou de la remorque d'un camion adossée à la cabine ou au tracteur.

Le système de couverture amovible comprenant un tel dispositif de compensation 4 couplé aux rails d'écoute décrits et à un tambour 2 mis en rotation par un moteur électrique permet de conserver tout le rayon de braquage du tracteur tout en permettant de maintenir la corde à une tension optimale. De plus, la maintenance du dispositif de compensation 4 est simplifiée, notamment grâce à l'accès direct aux réglages de position des poulies 40 et 50, ainsi qu'aux ressorts de rappel 16.

Le système de couverture amovible peut également être employé sur tout véhicule pour en fermer tout ou partie d'au moins un côté.

De façon plus générale, le système de couverture amovible peut également être disposé sur un bâtiment, de sorte à couvrir une ouverture dudit bâtiment.

## Revendications

1. Système de couverture amovible comprenant un moteur inséré dans un tambour (2), une corde, un dispositif de compensation (4), deux rails d'écoute (5a,5b), au moins un arceau de conduite (6a) et une couverture amovible, le au moins un arceau de conduite (6a) étant relié à la corde et à la couverture amovible, et étant conçu pour que chacune de ses extrémités coulisse dans un rail d'écoute (5a,5b), la corde transitant dans chaque rail d'écoute (5a,5b) et dans le dispositif de compensation (4) et étant reliée à ses deux extrémités au tambour (2), de sorte que la mise en rotation du tambour (2) par le moteur fait se déplacer la corde dans un sens fonction du sens de rotation du tambour (2), déployant ou rétractant la couverture amovible par déplacement du au moins un arceau de conduite (6a),
chaque rail d'écoute (5a,5b) est muni d'au moins une poulie d'extrémité (21a,21b) et d'au moins deux poulies d'angle (20a,20b,23a,23b) conçues pour guider la corde du dispositif de compensation vers la au moins une poulie d'extrémité (21a,21b), et le dispositif de compensation (4) est conçu pour compenser automatiquement les variations de tension de la corde.

2. Système de couverture amovible selon la revendication 1, comprenant au moins un arceau suiveur (6b), lié seulement à la couverture amovible et étant conçu pour que chacune de ses extrémités coulisse dans un rail d'écoute (5a,5b).

3. Système de couverture amovible selon l'une quelconque des revendications précédentes, dans lequel les arceaux (6a, 6b) sont aptes à amortir un choc qui leur est appliqué.

4. Système de couverture amovible selon l'une quelconque des revendications précédentes, dans lequel le tambour (2) est muni dans sa partie centrale d'une couronne (2a) formant une première vis sans fin, le système de couverture amovible comprenant par ailleurs un dispositif de guidage (3) muni de deux poulies (3a,3b) reliées entre elles par un cylindre (3c) fileté formant une deuxième vis sans fin, conçu pour s'engrener dans la première vis sans fin, de sorte que le dispositif de guidage (3) soit entrainé en rotation et en translation lorsque le tambour (2) est en rotation, les poulies (3a,3b) se déplaçant alors à une vitesse telle qu'elles sont toujours alignées avec le point d'enroulement de la corde sur le tambour (2).

5. Système de couverture amovible selon l'une quelconque des revendications précédentes, dans lequel le dispositif de compensation (4) comprend un support central (17) allongé, deux cavaliers (18a,18b) montés coulissants sur le support central (17), au moins deux ressorts de rappel (16) et, des poulies,
le premier cavalier (18a) portant une septième poulie (12) et étant connecté à une première extrémité du dispositif de compensation (4) par au moins un ressort (16) de sorte à compenser la tension exercée par la corde sur la septième poulie (12), le deuxième cavalier (18b) portant une huitième poulie (53) et étant connecté à une deuxième extrémité du dispositif de compensation (4) par au moins un ressort (16) de sorte à compenser la tension exercée par la corde sur la huitième poulie (53),
un premier ensemble de poulies (10,11,12,13,14,19) permettant de renvoyer la corde du tambour (2) vers le premier rail d'écoute (5a),
un deuxième ensemble de poulies (30,40,41) permettant de renvoyer la corde du premier rail d'écoute (5a) vers le deuxième rail d'écoute (5b),
un troisième ensemble de poulies (50,51,52,53,54,60) permettant de renvoyer la corde du deuxième rail d'écoute (5b) vers le tambour (2).

6. Système de couverture amovible selon la revendication 5, dans lequel chaque cavalier (18a,18b) comprend une première partie, une deuxième partie et une troisième partie contiguës, la première et la troisième parties étant face à face, les cavaliers (18a,18b) étant disposés sur le support central (17) de sorte que leurs premières et troisièmes parties soient disposées de part et d'autre.

7. Système de couverture amovible selon la revendication 6, dans lequel la première partie d'un premier cavalier (18a) supporte la septième poulie (12) sur sa face interne, la troisième partie d'un deuxième cavalier (18b) supportant la huitième poulie (53) également sur sa face interne.

8. Système de couverture amovible selon l'une quelconque des revendications 6 ou 7, dans lequel les ressorts (16) sont disposés sur la deuxième face du dispositif de compensation (4) et sont reliés aux deuxièmes parties des cavaliers (18a,18b).

9. Système de couverture amovible selon l'une quelconque des revendications 5 à 8, dans lequel le deuxième ensemble de poulies (30,40,41) comprend une quatrième poulie (40) disposée dans une fente ménagée dans l'habillage du dispositif de compensation (4) de sorte à pouvoir en modifier la position, le réglage de la position de la quatrième poulie (40) permettant de régler la différence de position entre les deux extrémités du au moins un arceau de conduite (6a), afin d'en ajuster l'alignement.

10. Système de couverture amovible selon l'une quelconque des revendications 5 à 9, dans lequel le troisième ensemble de poulies (50,51,52,53,54,60) comprend une cinquième poulie (50) disposée dans une fente ménagée dans l'habillage du dispositif de compensation (4) de sorte à pouvoir en modifier la position, le réglage de la position de la cinquième poulie (50) permettant de régler la tension de la corde.

11. Application du système de couverture amovible selon l'une quelconque des revendications 1 à 10, à la couverture d'un camion, d'une remorque de camion ou d'un bâtiment.

## Patentansprüche

1. Abnehmbares Abdeckungssystem, das einen in eine Trommel (2) eingesetzten Motor, ein Seil, eine Ausgleichsvorrichtung (4), zwei Schotschienen (5a, 5b), mindestens einen Führungsbügel (6a) und eine abnehmbare Abdeckung umfasst, wobei der mindestens eine Führungsbügel (6a) mit dem Seil und der abnehmbaren Abdeckung verbunden ist und so konzipiert ist, dass jedes seiner Enden in einer Schotschiene (5a, 5b) gleitet, wobei das Seil durch jede Schotschiene (5a, 5b) und durch die Ausgleichsvorrichtung (4) läuft und an seinen zwei Enden mit der Trommel (2) verbunden ist, sodass das Drehen der Trommel (2) durch den Motor das Seil sich in einer Richtung verlagern lässt, die von der Drehrichtung der Trommel (2) abhängig ist, wodurch die abnehmbare Abdeckung durch Verlagern des mindestens einen Führungsbügels (6a) ausgefahren oder zurückgezogen wird,
jede Schotschiene (5a, 5b) mit mindestens einer Endrolle (21a, 21b) und mindestens zwei Winkelrollen (20a, 20b, 23a, 23b) ausgestattet ist, die so konzipiert sind, dass sie das Seil von der Ausgleichsvorrichtung zu der mindestens einen Endrolle (21a, 21b) führen, und die Ausgleichsvorrichtung (4) so konzipiert ist, dass sie die Spannungsschwankungen des Seils automatisch ausgleicht.

2. Abnehmbares Abdeckungssystem nach Anspruch 1, das mindestens einen mitlaufenden Bügel (6b) umfasst, der nur mit der abnehmbaren Abdeckung verbunden ist und so konzipiert ist, dass jedes seiner Enden in einer Schotschiene (5a, 5b) gleitet.

3. Abnehmbares Abdeckungssystem nach einem der vorstehenden Ansprüche, wobei die Bügel (6a, 6b) in der Lage sind, eine auf sie einwirkende Erschütterung zu dämpfen.

4. Abnehmbares Abdeckungssystem nach einem der vorstehenden Ansprüche, wobei die Trommel (2) in ihrem Mittelteil mit einem Kranz (2a) ausgestattet ist, der eine erste Schnecke bildet, wobei das abnehmbare Abdeckungssystem darüber hinaus eine Führungsvorrichtung (3) umfasst, die mit zwei Rollen (3a, 3b) ausgestattet ist, die durch einen Gewindezylinder (3c), der eine zweite Schnecke bildet, die so konzipiert ist, dass sie in die erste Schnecke eingreift, miteinander verbunden sind, sodass die Führungsvorrichtung (3) drehend und verschiebend angetrieben wird, wenn sich die Trommel (2) dreht, wobei sich die Rollen (3a, 3b) dann mit einer solchen Geschwindigkeit verlagern, dass sie immer mit dem Aufwickelpunkt des Seils auf die Trommel (2) ausgerichtet sind.

5. Abnehmbares Abdeckungssystem nach einem der vorstehenden Ansprüche, wobei die Ausgleichsvorrichtung (4) einen länglichen Mittelträger (17), zwei Reiter (18a, 18b), die gleitend auf dem Mittelträger (17) angebracht sind, mindestens zwei Rückstellfedern (16) und Rollen umfasst, wobei der erste Reiter (18a) eine siebte Rolle (12) trägt und über mindestens eine Feder (16) mit einem ersten Ende der Ausgleichsvorrichtung (4) verbunden ist, um die von dem Seil auf die siebte Rolle (12) ausgeübte Spannung auszugleichen, wobei der zweite Reiter (18b) eine achte Rolle (53) trägt und über mindestens eine Feder (16) mit einem zweiten Ende der Ausgleichsvorrichtung (4) verbunden ist, um die von dem Seil auf die achte Rolle (53) ausgeübte Spannung auszugleichen,
wobei ein erster Satz Rollen (10, 11, 12, 13, 14, 19) es ermöglicht, das Seil von der Trommel (2) zur ersten Schotschiene (5a) umzulenken,
wobei ein zweiter Satz Rollen (30, 40, 41) es ermöglicht, das Seil von der ersten Schotschiene (5a) zur zweiten Schotschiene (5b) umzulenken,
wobei ein dritter Satz Rollen (50, 51, 52, 53, 54, 60) es ermöglicht, das Seil von der zweiten Schotschiene (5b) zur Trommel (2) umzulenken.

6. Abnehmbares Abdeckungssystem nach Anspruch 5, wobei jeder Reiter (18a, 18b) einen ersten Teil, einen zweiten Teil und einen dritten Teil umfasst, die aneinandergrenzen, wobei der erste und der dritte Teil einander zugewandt sind, wobei die Reiter (18a, 18b) auf dem Mittelträger (17) so angeordnet sind, dass ihre ersten und dritten Teile auf der einen und der anderen Seite angeordnet sind.

7. Abnehmbares Abdeckungssystem nach Anspruch 6, wobei der erste Teil eines ersten Reiters (18a) die siebte Rolle (12) auf seiner Innenseite trägt, wobei der dritte Teil eines zweiten Reiters (18b) die achte Rolle (53) ebenfalls auf seiner Innenseite trägt.

8. Abnehmbares Abdeckungssystem nach einem der Ansprüche 6 oder 7, wobei die Federn (16) auf der zweiten Seite der Ausgleichsvorrichtung (4) angeordnet sind und mit den zweiten Teilen der Reiter (18a, 18b) verbunden sind.

9. Abnehmbares Abdeckungssystem nach einem der Ansprüche 5 bis 8, wobei der zweite Satz Rollen (30, 40, 41) eine vierte Rolle (40) umfasst, die in einem Schlitz angeordnet ist, der in der Verkleidung der Ausgleichsvorrichtung (4) ausgestaltet ist, um ihre Position verändern zu können, wobei das Einstellen der Position der vierten Rolle (40) es ermöglicht, die Positionsdifferenz zwischen den zwei Enden des mindestens einen Führungsbügels (6a) einzustellen, um dessen Ausrichtung anzupassen.

10. Abnehmbares Abdeckungssystem nach einem der Ansprüche 5 bis 9, wobei der dritte Satz Rollen (50, 51, 52, 53, 54, 60) eine fünfte Rolle (50) umfasst, die in einem Schlitz angeordnet ist, der in der Verkleidung der Ausgleichsvorrichtung (4) ausgestaltet ist, um ihre Position verändern zu können, wobei das Einstellen der Position der fünften Rolle (50) es ermöglicht, die Spannung des Seils zu regeln.

11. Anwendung des abnehmbaren Abdeckungssystems nach einem der Ansprüche 1 bis 10 auf die Abdeckung eines Lastkraftwagens, eines Lastkraftwagenanhängers oder eines Gebäudes.

## Claims

1. A removable roofing system comprising a motor inserted inside a drum (2), a cord, a compensation device (4), two rigging rails (5a,5b), at least one guide arch (6a) and a removable roofing, the at least one guide arch (6a) being connected to the cord and to the removable roofing, and being designed so that each of its ends slides in a rigging rail (5a,5b), the cord passing along each rigging rail (5a,5b) and through the compensation device (4) and being connected at its two ends to the drum (2), so that the rotating of the drum (2) by the motor causes the cord to move in a direction dependent on the direction of rotation of the drum (2), deploying or retracting the removable roofing by moving the at least one guide arch (6a),
each rigging rail (5a,5b) is equipped with at least one end pulley (21a,21b) and with at least two corner-block deflecting pulleys (20a,20b,23a,23b) which are designed to guide the cord from the compensation device to the at least one end pulley (21a,21b), and the compensation device (4) is designed to automatically compensate for variations in cord tension.

2. The removable roofing system according to claim 1, comprising at least one follower arch (6b), connected only to the removable roofing and being designed so that each of its ends slides in a rigging rail (5a,5b).

3. The removable roofing system according to any of the preceding claims, wherein the arches (6a,6b) are capable of absorbing a shock applied thereto.

4. The removable roofing system according to any of the preceding claims, in which the drum (2) is equipped in its central part with a crown (2a) forming a first worm, the removable roofing system further comprising a guide device (3) equipped with two pulleys (3a,3b) connected to each other by a threaded cylinder (3c) forming a second worm, designed to mesh into the first worm, so that the guide device (3) is rotatably and translationally driven when the drum (2) is rotating, the pulleys (3a,3b) then moving at a speed such that they are always aligned with the winding point of the cord on the drum (2).

5. The removable roofing system according to any of the preceding claims, wherein the compensation device (4) comprises an elongate central support (17), two staples (18a, 18b) slidably mounted onto the central support (17), at least two return springs (16) and, pulleys,
the first staple (18a) carrying a seventh pulley (12) and being connected to a first end of the compensation device (4) by at least one spring (16) so as to compensate for the tension exerted by the cord on the seventh pulley (12), the second staple (18b) carrying an eighth pulley (53) and being connected to a second end of the compensation device (4) by at least one spring (16) so as to compensate for the tension exerted by the cord on the eighth pulley (53),
a first set of pulleys (10,11,12,13,14,19) for returning the cord from the drum (2) to the first rigging rail (5a),
a second set of pulleys (30,40,41) for returning the cord from the first rigging rail (5a) to the second rigging rail (5b),
a third set of pulleys (50,51,52,53,54,60) for returning the cord from the second rigging rail (5b) to the drum (2).

6. The removable roofing system according to claim 5, wherein each staple (18a,18b) comprises a first part, a second part and a third part contiguous to each other, the first and third parts facing each other, the staples (18a,18b) being arranged on the central support (17) so that their first and third parts are arranged on either side.

7. The removable roofing system according to claim 6, wherein the first part of a first staple (18a) supports the seventh pulley (12) on its inner face, the third part of a second staple (18b) supporting the eighth pulley (53) also on its inner face.

8. The removable roofing system according to any of claims 6 or 7, wherein the springs (16) are arranged on the second face of the compensation device (4) and are connected to the second parts of the staples (18a,18b).

9. The removable roofing system according to any of claims 5 to 8, wherein the second set of pulleys (30,40,41) comprises a fourth pulley (40) arranged in a slot provided in the trim of the compensation device (4) so as to be able to change its position, the setting of the position of the fourth pulley (40) enabling the difference in position between the two ends of the at least one guide arch (6a) to be set, in order to adjust its alignment.

10. The removable roofing system according to any of claims 5 to 9, wherein the third set of pulleys (50,51,52,53,54,60) comprises a fifth pulley (50) arranged in a slot provided in the trim of the compensation device (4) so as to be able to change its position, the setting of the position of the fifth pulley (50) enabling the cord tension to be set.

11. An application of the removable roofing system according to any of claims 1 to 10, to the roofing of a truck, a truck trailer or a building.
